(19) **Europäisches Patentamt**
**European Patent Office**
**Office européen des brevets**

(11) **EP 2 052 831 A1**

(12) **EUROPEAN PATENT APPLICATION**
published in accordance with Art. 153(4) EPC

(43) Date of publication:
**29.04.2009 Bulletin 2009/18**

(51) Int Cl.:
**B29C 43/12** (2006.01) **B29B 11/16** (2006.01)
**B29C 70/06** (2006.01) **B32B 5/00** (2006.01)

(21) Application number: **07792650.9**

(22) Date of filing: **17.08.2007**

(86) International application number:
**PCT/JP2007/066034**

(87) International publication number:
**WO 2008/020628 (21.02.2008 Gazette 2008/08)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **18.08.2006 JP 2006223633**

(71) Applicants:
• **Fukui Prefectural Government**
  **Fukui-shi**
  **Fukui 910-8580 (JP)**
• **Mitsuya Co., Ltd.**
  **Fukui-shi**
  **Fukui 910-0108 (JP)**

(72) Inventors:
• **KAWABE, Kazumasa**
  **Fukui-shi**
  **Fukui 910-0102 (JP)**
• **ISHIDA, Kichiro**
  **Fukui-shi**
  **Fukui 910-0108 (JP)**

(74) Representative: **Whalley, Kevin**
  **Marks & Clerk**
  **90 Long Acre**
  **London WC2E 9RA (GB)**

(54) **MULTIAXIALLY REINFORCED LAMINATED MOLDINGS AND PROCESS FOR PRODUCTION THEREOF**

(57) An object of the present invention is to provide a laminated molding having high strength and reduced possibility of layer separation, a multiaxially reinforced laminated molding capable of reducing the production time and the production cost, and a method for producing the same. A multiaxially reinforced laminated molding (F) is formed of fiber-reinforced layers (SR1 to SR3), each including reinforcing fiber sheets stacked on top of each other such that reinforcing fibers of the reinforcing fiber sheets are oriented in three axial directions. Resin layers (TP1 and TP2) are disposed among the fiber-reinforced layers. The resin layers (TP1 and TP2) are formed of many particles of a thermoplastic resin material that are substantially uniformly distributed and heat-sealed together. The distributed thermoplastic resin material is adhered to the adjacent fiber-reinforced layer through heat-sealing. The thermoplastic resin material has many fine gaps and the entirety of the fiber-reinforced layers and the resin layers are thoroughly impregnated with the thermosetting resin material.

FIG. 1

EP 2 052 831 A1

**Description**

Technical Field

The present invention relates to a multiaxially reinforced laminated molding formed of reinforcing fiber sheets, which are made of reinforcing fibers such as carbon fibers and glass fibers, arranged in multiple directions and impregnated with a thermosetting resin serving as a matrix, and relates to a method for producing the same.

Background Art

Fiber-reinforced composite materials formed by combining a fiber material and a matrix material are light and stiff materials, and enable various functional designs. Such fiber-reinforced composite materials are used in a wide range of fields, including aerospace field, transportation field, structural engineering field, and exercise equipment field. In particular, fiber-reinforced plastics (FRPs) formed by combining a reinforcing fiber material, such as carbon fibers or glass fibers, and a thermosetting resin material are the mainstream. It is possible to design FRPs having enhanced multidirectional strength by staking reinforcing fiber sheets, which are formed of filaments arranged in one direction, such that they are oriented in multiple directions. Some FRPs are produced using fabric sheets formed of ribbon-like filament yarn arranged in one direction.

The use of a thermosetting resin material, such as an epoxy resin material, as the matrix resin material is advantageous in that fiber tows are easily impregnated with the resin material because of its low viscosity during molding, making it easy to produce moldings through various molding methods including a lamination molding method. However, in general, thermosetting resin materials have low toughness, which makes the resulting moldings have poor shock resistance. In addition, laminated moldings suffer from a tendency to cause layer separation upon application of a tensile load.

As a countermeasure against layer separation, for example, Patent Document 1 discloses a fiber-reinforced composite material formed of reinforcing fibers composed of filaments, a thermosetting resin composition, particles insoluble in the thermosetting resin composition, and particles made of a resin soluble in the thermosetting resin composition. The two types of particles are localized on the surface. The two types of particles localized on the surface serve to maintain the ease of handling of prepregs and improve the shock resistance and the interlaminar fracture toughness. Examples of methods for localizing particles on the surface, disclosed therein, include a method in which the two types of particles are deposited on the surface of a prepreg formed of reinforcing fibers and a matrix resin, a method in which the two types of particles preliminarily mixed in a matrix resin uniformly are localized on the surface of a prepreg through filtration caused by gaps among fibers during a process of impregnating the reinforcing fibers, and a method in which a primary prepreg formed of reinforcing fibers impregnated with a portion of matrix is prepared and a film coated with the rest of the matrix resin containing a high concentration of the two types of particles is applied to the primary prepreg. Patent Document 2 also discloses a prepreg formed of reinforcing fibers, a matrix resin, and resin particles.

Non-patent Document 1 discloses another method in which a thin prepreg sheet is used to produce a fiber-reinforced composite material through lamination molding. This prevents occurrence of microcracks (in-layer resin cracks) and delamination (layer separation).

Meanwhile, it is important to develop a low-cost production technology in molding processing of composite materials. In a lamination molding method, which is regarded as the mainstream molding processing method, the issue is how efficiently fiber-reinforced sheets or prepreg sheets are stacked. As a solution to the issue, a method using a multiaxially reinforced sheet material, in which fibers are preliminarily arranged in multiple directions, is proposed, which draws attention because of its advantages in that the number of laminated layers is reduced and quasi-isotropy is easily obtained.

As an example of the multiaxially reinforced sheet material, Patent Document 3 discloses a fiber-reinforced plastic formed of a stitched base material impregnated with a matrix resin. The stitched base material is formed of a plurality of sheets, each including a plurality of carbon fiber tow threads arranged parallel to each other, stacked on top of each other such that the directions in which the carbon fiber threads of the sheets are arranged are differentiated from the reference direction. The sheets are integrated by a stitching thread.

Patent Document 4 discloses a biaxially reinforcing fiber-reinforced sheet formed of two layers, namely, a first fiber sheet layer in which the direction of the fiber sheet with respect to the longitudinal direction is $+\theta°$ and a second fiber sheet layer in which the direction of the fiber sheet with respect to the longitudinal direction is $-\theta°$. The fiber sheets are made of a heat-adhesive thread or fiber tows coated with filler.

Patent Document 1: Japanese Unexamined Patent Application Publication No. Hei 7-41575
Patent Document 2: United States Patent No. 5028478
Patent Document 3: International Publication No. 2001/063033

Patent Document 4: Japanese Unexamined Patent Application Publication No. 2006-022471
Patent Document 5: Pamphlet of International Publication No. 2005/002819
Non-patent Document 1: Hideki Sasayama and five others, "Influence of layer thickness on first ply failure of multidirectionally reinforced composite material laminated plate", journal of the Japan Society for Composite Materials 30, 4 (2004): 142-148.

Disclosure of Invention

Problems to be Solved by the Invention

In the methods disclosed in the above-mentioned Patent Documents 1 and 2, a molding is formed by staking unidirectionally fiber-reinforced prepreg sheets having particles localized at the sheet surfaces. However, when a stack of the prepreg sheets is molded by an autoclave method or the like, a thermosetting resin material such as epoxy resin flows in fiber tows and causes the particles to flow with the thermosetting resin. Thus, it is difficult to allow the particles to stay between the sheet layers in a stable condition. Failure to uniformly distribute a sufficient amount of particles between the layers causes unevenness in strength, which makes it impossible to sufficiently improve the interlaminar fracture toughness.

In addition, although Patent Documents 1 and 2 disclose methods for making a multidirectionally reinforced laminated molding using unidirectionally reinforced prepreg sheets, such methods requires not only the effort to preliminarily produce the unidirectionally reinforced prepreg sheets but also the time to form the laminated molding as a result of an increase in the number of laminated layers of the prepreg sheets. This inevitably increases the production cost.

Patent Document 3 discloses the fiber-reinforced plastic formed of the multiaxially reinforced stitched base material impregnated with the resin material. However, the presence of the stitching thread causes an excessive amount of the thermosetting resin material to stay at the stitched portion, which, after the laminated molding is formed, causes stress to be concentrated on the stitched portion and decreases the strength of the laminated material. In addition, some portions of the fiber tows cannot be impregnated with the thermosetting resin because the stitching thread binds the fiber tows.

Patent Document 4 discloses the biaxially reinforcing fiber-reinforced sheet using the heat-adhesive thread or the fiber sheets coated by the filler. Because the purpose of using the heat-adhesive thread or the filler is to prevent the fibers from coming apart, that is, to seal the fibers, the heat-adhesive thread or the filler is not always uniformly distributed on the fiber sheets. In addition, because the amount of the heat-adhesive thread or the filler to be used is not fixed, the presence of a portion where a large amount of the heat-adhesive thread or the filler exists causes stress to be concentrated thereon and makes the portion fragile, after the laminated molding is formed. In other words, the heat-adhesive thread or the filler is used not for the purpose of making a laminated molding that is excellent in mechanical characteristics through impregnation with the thermosetting resin material.

As a result of intensive research and development, the present inventors found it possible to make a laminated molding less likely to suffer from microcracks (in-layer resin cracks) and delamination (layer separation) by using a wide and thin fiber-reinforced sheet formed of a spread filament tow, i.e., a bundle of filaments, as described in Non-patent Document 1. In addition, as disclosed in Patent Document 5, the present inventors have developed a spreading technology for producing wide and thin multi-filament spread sheets from a fiber tow having a large fineness, which are low in material cost.

An object of the present invention is to provide a multiaxially reinforced laminated molding including reinforcing fibers and a thermosetting resin material and having high strength and reduced possibility of layer separation, and to provide a method for producing the multiaxially reinforced laminated molding, the method achieving reductions in the production time and the production cost, on the basis of the above-mentioned discovery and spreading technology.

Means for Solving the Problems

A multiaxially reinforced laminated molding of the present invention includes a plurality of fiber-reinforced layers stacked such that reinforcing fibers are oriented in n-axial directions (n is two or more) and is impregnated with a thermosetting resin material and cured. At least one of the fiber-reinforced layers has an average thickness of 80 $\mu$m or less. A resin layer having an average thickness of 0.3 x t or less, t being an average thickness of the fiber-reinforced layer on one side or the fiber-reinforced layers on both sides of the resin layer, is disposed between the fiber-reinforced layers. The resin layer contains 30% to 70% by volume of a thermoplastic resin material that is substantially uniformly distributed in a thermosetting resin material and at least partially adhered to the fiber-reinforced layers. Furthermore, the resin layer may have an average thickness of 0.2 x t or less, t being an average thickness of the fiber-reinforced layer on one side or the fiber-reinforced layers on both sides of the resin layer. Furthermore, the thermoplastic resin material may be a particulate or fibrous material. Furthermore, all of the fiber-reinforced layers may have an average

thickness of 80 μm or less.

A method for producing a multiaxially reinforced laminated molding of the present invention includes: a resin deposition step including preparing a plurality of reinforcing fiber sheets each formed of a plurality of continuous reinforcing fibers arranged substantially uniformly, at least one of the reinforcing fiber sheets having a weight of 80 g/m$^2$ or less, dispersing a thermoplastic resin material substantially uniformly on one surface or both surfaces of each reinforcing fiber sheet, the amount of the thermoplastic resin material being 10% or less relative to the weight of the reinforcing fiber sheet having a lower weight per unit area than the reinforcing fiber sheet adjacent thereto when stacked, and heating or applying heat and pressure to the thermoplastic resin material to deposit the thermoplastic resin material onto the reinforcing fiber sheets to form resin-deposited reinforcing fiber sheets; a laminating step for forming a laminated sheet by stacking a plurality of the resin-deposited reinforcing fiber sheets such that the directions in which the reinforcing fibers are arranged are oriented in multiple directions and such that the thermoplastic resin material is disposed between the resin-deposited reinforcing fiber sheets; an impregnation step for forming a multiaxially reinforced prepreg sheet by impregnating the laminated sheet with a thermosetting resin material from at least one surface thereof; and a molding step including cutting the multiaxially reinforced prepreg sheet into pieces having a required size, stacking a required number of the prepreg sheets at required angles, and subjecting the prepreg sheets to hot press molding to cure the thermosetting resin material. Furthermore, in the laminating step, at least one continuous resin-deposited reinforcing fiber sheet may be used to form a continuous laminated sheet.

Another method for producing a multiaxially reinforced laminated molding of the present invention includes: a resin deposition step including preparing a plurality of reinforcing fiber sheets each formed of a plurality of continuous reinforcing fibers arranged substantially uniformly, at least one of the reinforcing fiber sheets having a weight of 80 g/m$^2$ or less, dispersing a thermoplastic resin material substantially uniformly on one surface or both surfaces of each reinforcing fiber sheet, the amount of the thermoplastic resin material being 10% or less relative to the weight of the reinforcing fiber sheet having a lower weight per unit area than the reinforcing fiber sheet adjacent thereto when stacked, and heating or applying heat and pressure to the thermoplastic resin material to deposit the thermoplastic resin material onto the reinforcing fiber sheets to form resin-deposited reinforcing fiber sheets; a laminating step for forming a continuous laminated sheet by stacking a plurality of the resin-deposited reinforcing fiber sheets including at least one continuous resin-deposited reinforcing fiber sheet such that the directions in which the reinforcing fibers are arranged are oriented in multiple directions and such that the thermoplastic resin material is disposed between the resin-deposited reinforcing fiber sheets; an impregnation step for forming a continuous multiaxially reinforced prepreg sheet by impregnating the continuous laminated sheet with a thermosetting resin material from at least one surface thereof; and a molding step including cutting the multiaxially reinforced prepreg sheet into pieces having a required size, stacking a required number of the prepreg sheets at required angles, and subjecting the prepreg sheets to hot press molding to cure the thermosetting resin material.

Another method for producing a multiaxially reinforced laminated molding of the present invention includes: a resin deposition step including preparing a plurality of reinforcing fiber sheets each formed of a plurality of continuous reinforcing fibers arranged substantially uniformly, at least one of the reinforcing fiber sheets having a weight of 80 g/m$^2$ or less, dispersing a thermoplastic resin material substantially uniformly on one surface or both surfaces of each reinforcing fiber sheet, the amount of the thermoplastic resin material being 10% or less relative to the weight of the reinforcing fiber sheet having a lower weight per unit area than the reinforcing fiber sheet adjacent thereto when stacked, and heating or applying heat and pressure to the thermoplastic resin material to deposit the thermoplastic resin material onto the reinforcing fiber sheets to form resin-deposited reinforcing fiber sheets; a laminating step for forming a laminated sheet by stacking a plurality of the resin-deposited reinforcing fiber sheets such that the directions in which the reinforcing fibers are arranged are oriented in multiple directions and such that the thermoplastic resin material is disposed between the resin-deposited reinforcing fiber sheets; and a molding step including cutting the laminated sheet into pieces having a required size, stacking a required number of the laminated sheets at required angles in a mold, injecting a thermosetting resin material in the mold so that the laminated sheets are impregnated with the thermosetting resin material, and subjecting the laminated sheets to heating or hot press molding to cure the thermosetting resin material.

The above-described manufacturing method may further include an integration step for heat-sealing the reinforcing fiber sheets together with the thermoplastic resin material by heating or applying heat and pressure to the laminated sheets. Furthermore, a microparticulate thermoplastic resin material having an average particle diameter of 80 μm or less or a fibrous thermoplastic resin material having an average cross-sectional diameter of 80 μm or less may be used as the thermoplastic resin material. Furthermore, at least one of the reinforcing fiber sheets may be a multi-filament spread thread sheet having a weight of 80 g/m$^2$ or less, the multi-filament spread thread sheet including a plurality of multi-filament spread threads, formed by continuously spreading a reinforcing fiber tow, arranged in a width direction.

Advantages

In the multiaxially reinforced laminated molding of the present invention, at least one of the fiber-reinforced layers has an average thickness of 80 µm or less. Accordingly, for example, when the direction in which a tensile load is applied is known, it can be expected that generation of microcracks (in-layer resin cracks) and delamination (layer separation) is prevented by forming the thin fiber-reinforced layer such that reinforcement is provided in a direction substantially perpendicular to such a direction, as disclosed in Non-patent Document 1. In addition, if all the layers are thin fiber-reinforced layers, they can resist loads applied in various directions, whereby generation of microcracks (in-layer resin cracks) and delamination (layer separation) can be prevented.

Furthermore, in the multiaxially reinforced laminated molding of the present invention, the resin layer having an average thickness of $0.3 \times t$ or less, t being an average thickness of the fiber-reinforced layer on one side or the fiber-reinforced layers on both sides of the resin layer, is formed between the fiber-reinforced layers. This reduces the thickness of the resin layer, whereby stress concentration on that portion is suppressed. If the average thickness is greater than $0.3 \times t$, stress is concentrated on that portion, increasing the likelihood of occurrence of layer separation and progress of separation. Furthermore, because various mechanical characteristics of the fiber-reinforced layers, such as flexural strength and compression strength, are improved by being held by the adjacent fiber-reinforced layer, a thinner resin layer is more preferable, and a resin layer having a thickness of $0.2 \times t$ or less is most preferable.

Because a particulate or fibrous thermoplastic resin material is substantially uniformly distributed between the fiber-reinforced layers, the resin layer always exists. The term "particulate thermoplastic resin material" includes such a material that is squashed flat.

According to the experiential knowledge obtained through the experiments conducted by the present inventors, the resin layer had a minimum average thickness of $0.077 \times t$ and partially had a thickness of $0.05 \times t$. Therefore, on the basis of this knowledge, the resin layer had an average thickness of $0.05 \times t$ or more. The resin layer had a maximum average thickness of $0.294 \times t$. Although the resin layer had a local thickness of $0.3 \times t$ or more, the entire resin layer had an average thickness of $0.3 \times t$ or less.

Furthermore, because the resin layer contains 30% to 70% by volume of a thermoplastic resin material that is substantially uniformly distributed in the thermosetting resin material and at least partially adhered to the fiber-reinforced layers, stress concentration due to nonuniform distribution of the thermoplastic resin material does not occur. In addition, the presence of 30% to 70% by volume of the thermoplastic resin material that is at least partially adhered to the fiber-reinforced layers makes it possible to assuredly prevent the reinforcing fibers from coming apart or becoming wavy because of the movement of the resin associated with the impregnation with the thermosetting resin material.

In the method for producing the multiaxially reinforced laminated molding of the present invention, it is important to prepare a plurality of reinforcing fiber sheets each formed of a plurality of continuous reinforcing fibers arranged substantially uniformly, at least one of the reinforcing fiber sheets having a weight of 80 g/m$^2$ or less, and to deposit the thermoplastic resin material on one surface or both surfaces of each reinforcing fiber sheet to seal the reinforcing fiber sheets. Since the substantially uniformly arranged reinforcements are preliminarily sealed by the thermoplastic resin material, it is possible to prevent the fibers from becoming wavy because of the movement of the resin when the reinforcing fiber sheets stacked in multiple directions are impregnated with the thermosetting resin material. Furthermore, by dispersing and depositing the thermoplastic resin material substantially uniformly on the entire reinforcing fiber sheets, it is possible to prevent the fibers from becoming wavy because of the movement of the resin on the entire reinforcing fiber sheets during impregnation with the thermosetting resin material.

In addition, by setting the amount of the thermoplastic resin material to be dispersed to 10% or less relative to the weight of the reinforcing fiber sheet having a lower weight per unit area than the reinforcing fiber sheet adjacent thereto when stacked, a thin resin layer can be formed. Note that a greater the amount of thermoplastic resin material is more preferable in order to allow the thermoplastic resin material to adhere to the reinforcing fibers and exert a sealing effect. However, an increase in the amount of the thermoplastic resin material thickens the resin layer formed between the fiber-reinforced layers, which causes stress concentration on that portion and increases the likelihood of occurrence of layer separation and progress of separation. According to the present inventors' knowledge, it is desirable to set the amount of the thermoplastic resin material in the range from 1% to 10% relative to the weight of the reinforcing fiber sheet having a lower weight per unit area than the reinforcing fiber sheet adjacent thereto when stacked to obtain a sealing effect while suppressing separation due to stress concentration.

By depositing the thermoplastic resin material onto the reinforcing fiber sheets through application of heat or heat and pressure to the dispersed thermoplastic resin material, the thermoplastic resin material is deposited in a flatly spread state. This reduces the thickness of the resulting resin layer. A particulate or fibrous thermoplastic resin material is preferable from the standpoint of substantially uniform distribution thereof and can be evenly adhered to the entire fiber-reinforced layers. Alternatively, the thermoplastic resin material may be dispersed by depositing a solution of the thermoplastic resin material dissolved in a volatile organic solvent evenly onto the reinforcing fiber sheets by spraying or applying it. The use of a microparticulate thermoplastic resin material having an average particle diameter of 80 µm or less or a fibrous thermoplastic resin material having an average cross-sectional diameter of 80 $\mu$m or less as the thermoplastic resin material enables more uniform dispersion of the thermoplastic resin material and contributes to a reduction in the thickness of the resin layer. Moreover, the dispersion of the thermoplastic resin material by spraying or applying the solution further reduces the thickness of the resin layer.

In addition, in the case of a fiber-reinforced layer with fiber content by volume of 60%, formed of carbon fibers having a fiber diameter of 7 $\mu$m, it is possible to form a thin fiber-reinforced layer having a fiber level of 80 g/m$^2$ and an average thickness of about 80 $\mu$m by using the reinforcing fiber sheet having a weight of 80 g/m$^2$ or less. Thus, it is possible to form a multiaxially reinforced laminated molding less likely to suffer from microcracks (in-layer resin cracks) and delamination (layer separation) by using a thinner fiber-reinforced layer.

Furthermore, only one impregnation step is required because the laminated sheet is impregnated with the thermosetting resin material. This reduces the production time and the production cost. For example, in a method for producing a multiaxially reinforced prepreg sheet including producing unidirectionally reinforced prepreg sheets and stacking these prepreg sheets on top of each other, several impregnation steps have to be performed to make a unidirectionally reinforced prepreg sheet. However, in the present invention, the multiaxially reinforced prepreg sheet can be efficiently produced because the laminated sheet is impregnated with the thermosetting resin material.

In addition, by cutting the laminated sheet into pieces having a required size and stacking a required number of the laminated sheets in a mold at required angles, it is possible to save efforts compared to the case in which known unidirectionally reinforced sheets are sequentially stacked on top of each other. The use of thin layer sheets increases the number of laminated layers and increases the likelihood of the fibers constituting the sheet coming apart. However, fibers in the laminated sheets used in the present invention do not come apart, and it is possible to reduce the number of laminated layers and increase the efficiency of the operation of stacking the laminated sheets in the mold.

Furthermore, because fibers in the laminated sheet used in the present invention are preliminarily uniformly dispersed, a portion where a large amount of resin exists (resin-rich area) is unlikely to be formed during resin impregnation, compared to a stitched multiaxially reinforced sheet. In particular, it is important that fibers be uniformly dispersed at a thin layer sheet portion. If the presence of the stitch and the like creates a portion where fibers are gathered and a portion where a large amount of resin exists, stress concentration due to such a nonuniformity occurs, which increases the possibility of occurrence of a problem such as separation.

In addition, by heat-sealing the reinforcing fiber sheets together with the thermoplastic resin material by heating or applying heat and pressure to the laminated sheets, the effect of sealing the reinforcing fiber sheets increases and the ease of handling the laminated sheets improves because the reinforcing fiber sheets do not come apart.


Best Modes for Carrying Out the Invention


Embodiments of the present invention will be described below in detail. Although the embodiments described below include various technical limitations since they are preferable specific examples for implementing the present invention, the present invention is not limited to these embodiments unless otherwise stated in the following description.

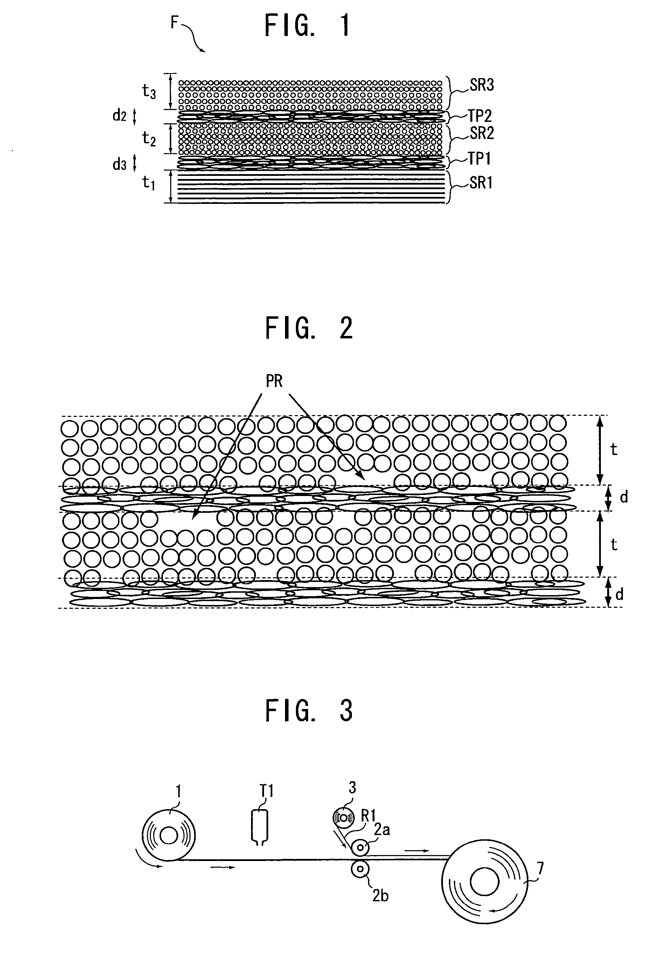

FIG. 1 is an enlarged partial cross-section of a multiaxially reinforced laminated molding F according to an embodiment of the present invention. The multiaxially reinforced laminated molding F is formed of a plurality of fiber-reinforced layers, each including reinforcing fiber sheets, stacked on top of each other such that reinforcing fibers of the reinforcing fiber sheets are oriented in n-axial directions (n is two or more). FIG. 1 is an enlarged view of the portion where fiber-reinforced layers SR1 to SR3, each including reinforcing fiber sheets, are stacked on top of each other such that reinforcing fibers of the reinforcing fiber sheets are oriented in different axial directions.

Resin layers TP1 and TP2 are disposed among the fiber-reinforced layers. The resin layers TP1 and TP2 are formed of a thermoplastic resin material that is substantially uniformly distributed, and are heat-sealed together. The distributed thermoplastic resin material is adhered to the adjacent fiber-reinforced layer through heat-sealing. The thermoplastic resin material, formed in a flatly spread shape by being subjected to heating or heat and pressure, exists in the resin layers. The thermoplastic resin material has many fine gaps so that it can be easily impregnated with a thermosetting resin material. Although it is not shown, the fiber-reinforced layers and the resin layers are thoroughly impregnated with the thermosetting resin material.

The reinforcing fiber sheets of the fiber-reinforced layers SR1 to SR3 are formed of a plurality of reinforcing fibers arranged substantially uniformly in a planar fashion. Examples of the reinforcing fibers include high-strength, high-modulus inorganic fibers and organic fibers used for FRP, such as carbon fibers, glass fibers, ceramic fibers, polyoxymethylene fibers, and aromatic polyamide fibers. These fibers may be used in combination, and the fineness thereof is not specified. These fibers are formed into a wide and thin reinforcing fiber sheet by a known technique such as one disclosed in Patent Document 3.

It is preferable that the reinforcing fiber sheets have a thickness of 80 $\mu$m or less. As described in Non-patent Document 1, a reduction in the thickness of the reinforcing fiber sheets prevents occurrence of layer separation. In the case of a fiber-reinforced layer with fiber content by volume of 60%, formed of carbon fibers having a fiber diameter of

7 μm, it is possible to form a thin fiber-reinforced layer having a fiber level of 80 g/m$^2$ and an average thickness of about 80 μm.

The measurement of the thickness was performed in accordance with JIS R3420-1989 "Glass fiber general test procedures" using a digital display micrometer with a minimum scale value of 1 μm. The reading at the time of the ratchet clicking three times while the measuring surface parallel to the sample surface is in light contact with the sample surface was adopted.

The thermoplastic resin material distributed in the resin layers serves to heat-seal the reinforcing fiber sheets and integrate the reinforcing fibers so as not to come apart. Although various thermoplastic resins, such as acrylic resin, polyester resin, and polyamide resin may be used, a thermoplastic resin material with a low melting point is preferable. For example, polyamide 12, which has a low water absorption rate, is particularly preferable. The thermoplastic resin material preferably has a size capable of securely fixing filaments and capable of being uniformly and thinly spread. In the case of a particulate thermoplastic resin material, the average particle diameter may be set to 80 μm or less, and more preferably, in the range from about 5 μm to 40 μm. It is possible to use a fibrous thermoplastic resin material instead of the particulate thermoplastic resin material. In such a case, staples or filaments having an average cross section diameter of 80 μm may be used.

The resin layers are formed by heating or applying heat and pressure to the thermoplastic resin material until it is flatly spread. The thermoplastic resin material has gaps so that it can be impregnated with the thermosetting resin material. To allow the thermoplastic resin material to be easily impregnated with the thermosetting resin material in a high quality condition without creating voids while stress concentration on the thermoplastic resin material is prevented, it is important to reduce the size of the gaps formed in the thermoplastic resin material and make the gaps as uniform as possible. To achieve this, it is necessary to reduce the size of the thermoplastic resin material and disperse the thermoplastic resin material as uniform as possible. Therefore, the thermoplastic resin material is more preferable in particulate form than in fibrous form, and it is more desirable to allow a particulate thermoplastic resin material having a small particle diameter to be uniformly dispersed.

Alternatively, a solution of the thermoplastic resin material dissolved in an organic solvent may be used. The thermoplastic resin material may be fixed to the reinforcing fibers by uniformly applying the thermoplastic resin material in a solution state to the reinforcing fiber sheets and volatilizing the solvent by heating or applying heat and pressure. Because the use of the solution-state thermoplastic resin involves a step of volatilizing the organic solvent, there may be an adverse effect on the human body. Accordingly, an adverse effect on the human body is reduced in a step using a powdered or fibrous thermoplastic resin material which does not use an organic solvent.

It is necessary to set the amount of the thermoplastic resin material distributed in the resin layers to a value sufficient to heat-seal the reinforcing fiber sheets but insufficient to hinder impregnation with the thermosetting resin material, and it is preferable to set the amount of the thermoplastic resin material to 10% or less, and more preferably, in the range from 3% to 8%, relative to the weight of the reinforcing fiber sheet having a lower weight per unit area than the reinforcing fiber sheet adjacent thereto when stacked.

Preferable examples of the thermosetting resin material include resins that are curable by heat or energy such as light or an electron beam, such as epoxy resin, unsaturated polyester resin, vinyl ester resin, and phenolic resin. In particular, epoxy resin is preferably used, and in general, epoxy resin is used in combination with a curing agent or a curing catalyst.

It is preferable that the resin layers contain 30% to 70% by volume of the thermoplastic resin material in the thermosetting resin material. The thermoplastic resin material content less than 30% by volume is insufficient to heat-seal the entire reinforcing fiber sheets, which increases the likelihood of the reinforcing fiber sheets coming apart. The thermoplastic resin material content greater than 70% by volume decreases the amount of the thermosetting resin material with which the thermoplastic resin material is impregnated. Thus, when the prepreg sheets are cured, the mechanical strength tends to decrease because of stress concentration between layers.

It is preferable that the thickness of each resin layer be set to the average thickness $0.3 \times t$ or less, t being an average thickness of the fiber-reinforced layer on one side or the fiber-reinforced layers on both sides of the resin layer. In the example of FIG. 1, for example, where d1 is the average thickness of the resin layer TP1, and t1 and t2 are the average thicknesses of the fiber-reinforced layers SR1 and SR2 on both sides thereof, respectively, d1 may be set to any one of the following:

$$d1 = 0.3 \times t1, \ 0.3 \times t2, \ \text{and} \ 0.3 \times (t1 + t2)/2$$

Because a resin layer with an average thickness greater than 0.3 times the average thickness of the fiber-reinforced layer is thick and increases the likelihood of occurrence of layer separation, it is preferable that the average thickness of the resin layer be set to 0.3 times or less the average thickness of the fiber-reinforced layers. Furthermore, because various mechanical characteristics of the fiber-reinforced layers, such as flexural strength and compression strength, are improved by being held by the adjacent fiber-reinforced layer, a thinner resin layer is more preferable, and a resin layer having a thickness of 0.2 times or less the average thickness of the fiber-reinforced layers is most preferable.

The fiber-reinforced layers sometimes contain localized resin-rich areas PR as shown in FIG. 2. However, because the size of such resin-rich areas PR is small, they do not cause decrease in mechanical strength due to stress concentration or the like reasons. Although the presence of the localized resin-rich areas or the like makes it difficult to provide a uniform thickness in some parts, the average thickness of the layer may be adopted as the thickness, as shown in FIG. 2.

It is preferable that the average thickness of the entire multiaxially reinforced prepreg sheet used to form a multiaxially reinforced laminated molding P be set to 300 $\mu$m or less. By setting the average thickness to 300 $\mu$m or less, the sheet is thoroughly impregnated with the thermosetting resin material to the inside during the production of the prepreg sheet. Thus, a high-quality sheet having no voids (gaps) can be formed. In contrast, a sheet with an average thickness greater than 300 $\mu$m has poor draping property, which makes processing during lamination molding of the prepreg sheet difficult.

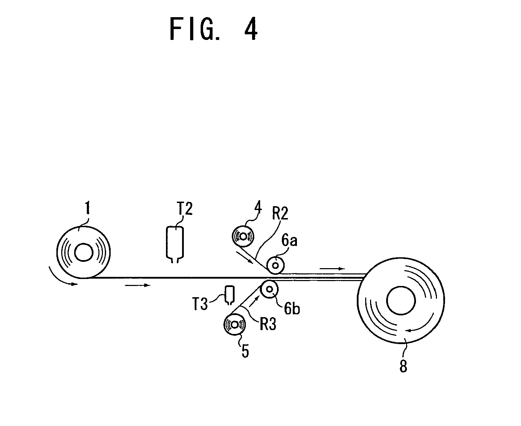

FIGS. 3 and 4 are diagrams showing resin deposition steps in the manufacturing process of the multiaxially reinforced laminated molding. FIG. 3 shows a resin deposition step in which the thermoplastic resin material is substantially uniformly dispersed on one surface of the reinforcing fiber sheet and heat-sealed.

The reinforcing fiber sheet spread by a known technique disclosed in, for example, Patent Document 3 is wrapped around a sheet-feeding roller 1 and is configured to be sequentially fed from the sheet-feeding roller 1. The weight of the reinforcing fiber sheet is set to 80 g/m$^2$. A sprayer T1 containing a powdered, fibrous, or liquid thermoplastic resin material is disposed above the reinforcing fiber sheet being fed. The thermoplastic resin material is sprayed substantially uniformly over the entire width of the upper surface of the reinforcing fiber sheet through a spraying port of the sprayer T1. The amount of the thermoplastic resin material to be sprayed is set to 5% or less with respect to the weight of the reinforcing fiber sheet having a lower weight per unit area than the reinforcing fiber sheet adjacent thereto when stacked.

A film-feeding roller 3 around which a release film R1 is wrapped is disposed above the reinforcing fiber sheet being fed. The release film R1 fed from the film-feeding roller 3 is transferred to the upper surface of the spread thermoplastic resin material. The reinforcing fiber sheet and the overlying release film R1 are allowed to pass between a heat roller 2a and a press roller 2b and taken up by a take-up roller 7 in a tight contact state. The thermoplastic resin material sprayed over the reinforcing fiber sheet is heat-sealed to the reinforcing fiber sheet through a heat treatment by the heat roller 2a, which prevents the reinforcing fibers from coming apart or becoming wavy.

FIG. 4 shows a resin deposition step in which the thermoplastic resin material is dispersed substantially uniformly over both surfaces of the reinforcing fiber sheet and heat-sealed. A sprayer T2 containing a powdered, fibrous, or liquid thermoplastic resin material is disposed above the reinforcing fiber sheet fed from the feeding roller 1. The thermoplastic resin material is sprayed substantially uniformly over the entire width of the upper surface of the reinforcing fiber sheet through the spraying port of the sprayer T1. The amount of the thermoplastic resin material to be sprayed is set to 5% or less with respect to the weight of the reinforcing fiber sheet having a lower weight per unit area than the reinforcing fiber sheet adjacent thereto when stacked.

A film-feeding roller 4 around which a release film R2 is wrapped is disposed above the reinforcing fiber sheet being fed. The release film R2 fed from the film-feeding roller 4 is transferred to the upper surface of the spread thermoplastic resin material. A film-feeding roller 5 around which a release film R3 is wrapped is disposed below the reinforcing fiber sheet being fed. A sprayer T3 containing a powdered, fibrous, or liquid thermoplastic resin material, is disposed above the upper surface of the release film R3 fed from the film-feeding roller 5 and sprays the thermoplastic resin material substantially uniformly over the entire width of the upper surface of the release film R3. The amount of the thermoplastic resin material to be sprayed is set to 5% or less with respect to the weight of the reinforcing fiber sheet having a lower weight per unit area than the reinforcing fiber sheet adjacent thereto when stacked.

The release film R2 disposed on the upper surface of the reinforcing fiber sheet and the release film R3 disposed on the lower surface of the reinforcing fiber sheet are allowed to pass between a heat roller 6a and a press roller 6b and taken up by a take-up roller 8 in a tight contact state. The thermoplastic resin material sprayed over the reinforcing fiber sheet is heat-sealed to the upper surface of the reinforcing fiber sheet through a heat treatment by the heat roller 6a. Similarly, the thermoplastic resin material spread over the release film R3 is heat-sealed to the lower surface of the reinforcing fiber sheet. Thus, the thermoplastic resin material heat-sealed to both surfaces of the reinforcing fiber sheet prevents the reinforcing fibers of the reinforcing fiber sheet from coming apart or becoming wavy.

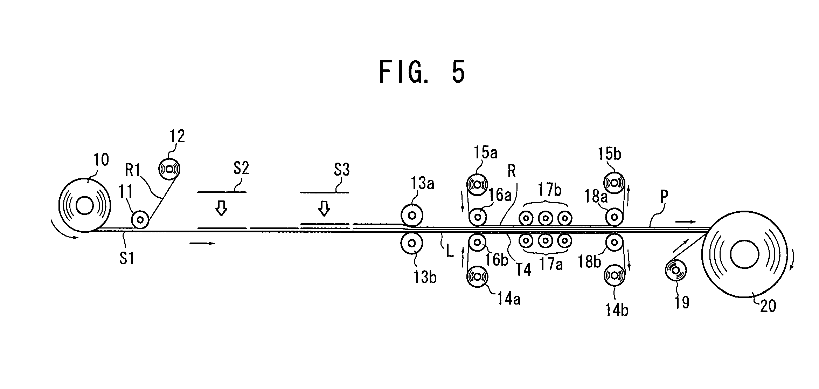

FIG. 5 shows a laminating step and an impregnation step in the manufacturing process of the multiaxially reinforced laminated molding. A reinforcing fiber sheet S1 with the resin deposited only on one surface, described with reference to FIG. 3, is configured to be sequentially fed from a sheet-feeding roller 10. The release film R1 adhered to the upper surface of the reinforcing fiber sheet S1 being fed is separated from the reinforcing fiber sheet S1 at a feed roller 11 and taken up by a film take-up roller 12 disposed above the feed roller 11.

A reinforcing fiber sheet S2 is cut into pieces having a predetermined length, i.e., the width of the reinforcing fiber sheet S1, and the pieces are sequentially disposed on the reinforcing fiber sheet S1 with the resin deposited on the upper surface thereof, from above. The reinforcing fiber sheet S2 is the reinforcing fiber sheet with the resin deposited on both surfaces, described with reference to FIG. 3, and is cut into pieces having a predetermined length after it is fed from a sheet-feeding roller (not shown) and the release films R2 and R3 on both surfaces are removed. The direction in which the reinforcing fibers of the reinforcing fiber sheets S2 are arranged is differentiated from that of the reinforcing fiber sheet S1, when the reinforcing fiber sheets S2 are disposed on the reinforcing fiber sheet S1. The reinforcing fiber sheets S2 after being cut are sequentially arranged such that they abut or overlie one another.

A reinforcing fiber sheet S3 is cut into pieces having a predetermined length, i.e., the width of the reinforcing fiber sheet S2, and the pieces are sequentially disposed on the arranged reinforcing fiber sheets S2, from above. The reinforcing fiber sheet S3 is the reinforcing fiber sheet with the resin deposited only on the lower surface, described with reference to FIG. 3, and is cut into pieces having a predetermined length after it is fed from a sheet-feeding roller (not shown) and the release film R1 on one surface is removed. The direction in which the reinforcing fibers of the reinforcing fiber sheets S3 are arranged is differentiated from those of the reinforcing fiber sheets S1 and S2, when the reinforcing fiber sheets S3 are disposed on the reinforcing fiber sheets S1 and S2. For example, when the arranging direction of the reinforcing fiber sheets S2 is shifted from that of the multi-filament spread sheet S1 by +45 degrees, the arranging direction of the reinforcing fiber sheets S3 may be shifted from that of the reinforcing fiber sheet S1 by -45 degrees. The reinforcing fiber sheets S3 after being cut are sequentially arranged such that they abut or overlie one another.

By allowing these three reinforcing fiber sheets S1 to S3 stacked on top of each other to pass between a heat roller 13a and a press roller 13b to be subjected to heating and pressing processes, the thermoplastic resin material deposited between the reinforcing fiber sheets is heated by the heat roller 13a and melted to form layers. Thus, these three reinforcing fiber sheets S1 to S3 are integrated by heat-sealing the thermoplastic resin material to form a continuous laminated sheet L. Because the amount of the laminar thermoplastic resin material deposited between the reinforcing fiber sheets in the above-described resin deposition step is 5% or less per unit area, the amount thereof will be 10% or less per unit area when integrated. Although half the amount of the thermoplastic resin material is deposited on each of the reinforcing fiber sheets in the resin deposition step in this example, the ratio of the amount of the thermoplastic resin material to be deposited on each of the reinforcing fiber sheets may be properly selected without being limited. That is, the amount of the thermoplastic resin material may be set such that it will be 10% or less per unit area finally.

The impregnation step with the thermosetting resin material will now be described. The laminated sheet L is conveyed with a release film R adhered to the upper surface thereof and an adhesive film T4 adhered to the lower surface thereof and allowed to pass through heat rollers 17a and press rollers 17b that form three pairs.

The release film R is wrapped around a film-feeding roller 15a and the adhesive film T4 is wrapped around a film-feeding roller 14a. The release film R and the adhesive film T4 are fed from the film-feeding rollers 14a and 15a, respectively, introduced between feed rollers 16a and 16b together with the laminated sheet L, and thus adhered to the upper and lower surfaces of the laminated sheet L. After the laminated sheet L passes through the heat rollers 17a and the press rollers 17b, constituting three pairs, and feed rollers 18a and 18b, the release film R is separated from the upper surface of the laminated sheet L and taken up by a film take-up roller 15b and the adhesive film T4 is separated from the lower surface of the laminated sheet L and taken up by a film take-up roller 14b.

The adhesive film T4 is formed of a release film and a thermosetting resin material deposited on the entirety of one surface thereof with a substantially uniform thickness. The adhesive film T4 is allowed to pass between the heat rollers 17a and the press rollers 17b such that the surface covered with the thermosetting resin material is adhered to the laminated sheet L. Thus, the laminated sheet L with the thermosetting resin material adhered to the entire lower surface thereof is heated and pressed, and the thermosetting resin material whose viscosity is decreased as a result of heating is injected in the thickness direction of the laminated sheet L. Although the injected thermosetting resin material permeates through the laminated sheet L towards the upper surface, it does not leak from the upper surface because the upper surface is covered with the release film R. Thus, the thermosetting resin material permeates through the laminated sheet L and spreads through the entire laminated sheet L. At this time, because the resin layers composed of the thermoplastic resin material, formed between the multi-filament spread sheets, have many gaps in the heat-sealing material, the thermosetting resin material smoothly passes and permeates therethrough. However, the thermoplastic resin material itself does not flow because it is heat-sealed to the reinforcing fiber sheets.

Thus, a prepreg P formed of the laminated sheet L impregnated with the thermosetting resin material, the laminated sheet L including the thermoplastic resin material substantially uniformly distributed between the reinforcing fiber sheets, is produced.

The thus produced prepreg P is taken up by a sheet take-up roller 20 after the release film R and the adhesive film T4 are removed from the upper and lower surfaces thereof, respectively. By allowing a release film wrapped around a film-feeding roller 19 to be taken up together with the prepreg P in a manner that the release film is adhered to the lower surface of the prepreg P, adhesion of the prepreg P in a rolled state is prevented.

In the impregnation step, by allowing the release film with the thermosetting resin material deposited thereon to adhere to at least one surface of the laminated sheet and heating it while applying pressure, only one impregnation step with the thermosetting resin material is required. Thus, the required amount or length of the release film can be reduced. Furthermore, by using a release film with a certain amount of thermosetting resin material thickly deposited thereon, the production cost of the release film to be used can be reduced compared to that of a conventional one, and the production cost can be minimized.

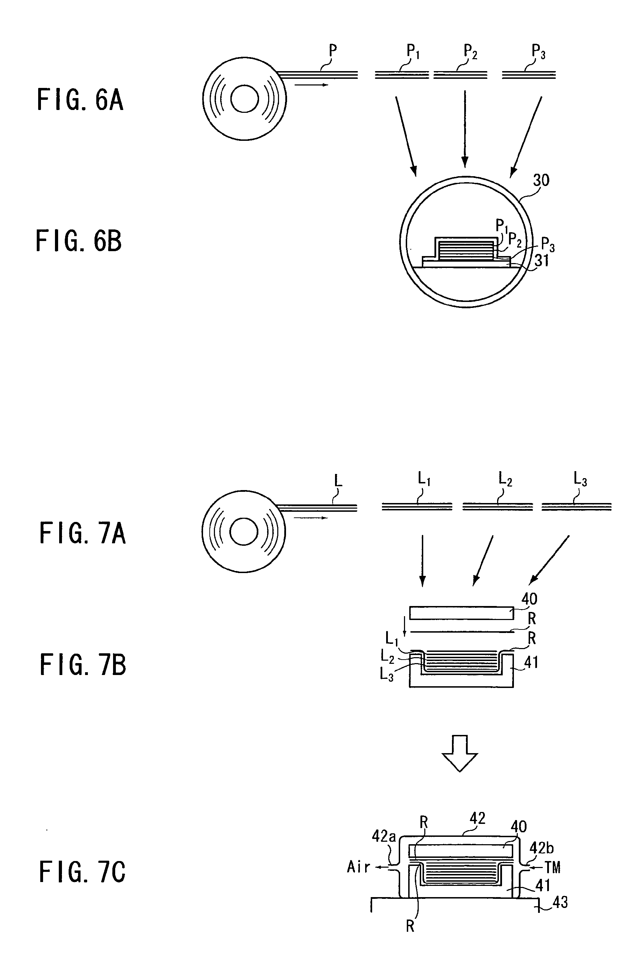

FIG. 6 shows a molding step in the manufacturing process of the multiaxially reinforced laminated molding. The prepreg P formed in the impregnation step is cut into pieces having a required size (FIG. 6A). The prepregs P1 to P3 after being cut are stacked on top of each other such that they are oriented in different directions and then placed in a mold 31 situated in an autoclave 30. By heating and applying pressure to the prepregs placed in the mold 31, the thermosetting resin material is cured and molded.

Although the reinforcing fiber sheets S2 and S3 after being cut are stacked on the reinforcing fiber sheet S1 in the laminating step in the above-described manufacturing method, it is also possible that the reinforcing fiber sheet be spirally folded to form a plurality of laminae, as disclosed in, for example, Japanese Unexamined Patent Application Publication No. 2003-221771. In this case too, the reinforcing fiber sheet may be folded while the thermoplastic resin material is spread between the laminae.

Another manufacturing process of the multiaxially reinforced laminated molding will now be described. Although, the prepregs impregnated with the thermosetting resin material are stacked in the above-described manufacturing process, the laminated sheets after being cut and stacked may be impregnated with the thermosetting resin material and molded.

Because the resin deposition step and the laminating step in this manufacturing process are the same as those in the above-described manufacturing process, an explanation thereof is omitted. FIG. 7 shows a molding step in this manufacturing process. The laminated sheet L formed in the laminating step shown in FIG. 4 is temporarily taken up and subjected to the molding step. In the molding step, the rolled laminated sheet L is drawn and cut into pieces having a required size (FIG. 7A). The laminated sheets L1 to L3 after being cut are stacked on top of each other such that they are oriented in different directions and placed on a lower mold 41 on which a release film R is laid. Then, the laminated sheets L1 to L3 are covered by another release film R and an upper mold 40 from above and placed in the mold (FIG. 7B).

The entirety of the prepared mold is sealed in a vacuum bag 42 and then placed in a heating unit 43 (FIG. 7C). The vacuum bag 42 is provided with an air-intake port 42a and a resin-inlet port 42b, and is heated at a predetermined temperature while the thermosetting resin material is introduced through the resin-inlet port 42b. The introduced thermosetting resin material, whose mobility has increased as a result of heating, smoothly flows in the vacuum bag 42. By injecting the thermosetting resin material while letting in air through the air-intake port 42a, the laminated sheets L1 to L3 can be thoroughly impregnated with the thermosetting resin material.

After the vacuum bag 42 is filled with the thermosetting resin material, the heating temperature of the heating unit 43 is raised to cure and mold the thermosetting resin material.

Examples

Example 1

A multiaxially reinforced prepreg sheet was produced using the following materials.

<Materials Used>

(Fiber Used as Reinforcing Fiber)

T800SC-24K produced by Toray Industries, Inc., fiber diameter: about 5.5 $\mu$m, number of fibers: 24000 (Resin Material Used as Thermosetting Resin Material) BT250E-1 produced by Bryte Technologies, Inc., epoxy resin (Resin Material Used as Thermoplastic Resin Material) SP-500 produced by Toray Industries, Inc., nylon 12 powder, average particle diameter: 5 $\mu$m

<Manufacturing Process>

(1) A reinforcing fiber tow T800SC-24K was spread to a width of 24 mm through a pneumatic tow-spreading method (refer to Japanese Patent No. 3049225) and wound around a reel as a multi-filament spread thread.

(2) Thirteen of the reels spooled with the multi-filament spread thread were arranged in the width direction to form a reinforcing fiber sheet having no gaps using the method and apparatus disclosed in Japanese Unexamined Patent Application Publication No. 2005-029912. The obtained reinforcing fiber sheet had a width of 310 mm and a fiber weight of about 43 g/m$^2$.

(3) A thermoplastic resin material SP-500 having an average weight ratio of about 8% was uniformly dispersed on one surface of the reinforcing fiber sheet. Then, the reinforcing fiber sheet was allowed to pass between heat rolls heated to 250°C to form a resin-deposited reinforcing fiber sheet on which the powdered thermoplastic resin was deposited and whose fibers are sealed so as not to come apart.

(4) A plurality of the thus-formed resin-deposited reinforcing fiber sheets were stacked with the resin-deposited surfaces facing up such that the arrangement directions of the reinforcing fibers were oriented at, in sequence, 90 degrees, -45 degrees, 0 degrees, and 45 degrees, and then processed by a continuous press apparatus (refer to Japanese Unexamined Patent Application Publication No. 2003-181832) under processing conditions of 250°C and about 0.5 MPa to form a continuous laminated sheet.

(5) The resulting laminated sheet was continuously impregnated with a thermosetting resin material BT250E-1 from both surfaces thereof using the above-mentioned continuous press apparatus, under processing conditions of 90°C and about 1 MPa. Thus, a multiaxially reinforced prepreg sheet having a width of about 310 mm, an average thickness of about 177 $\mu$m, and a fiber content by volume of about 54% was formed.

<Production and Evaluation of Laminated Molding Plate>

(1) The resulting multiaxially reinforced prepreg sheet was cut into pieces having a required size, and six of them were stacked and subjected to a heat treatment lasting two hours at a temperature of 125°C in an autoclave (produced by ASHIDA MFG. CO.,LTD.) until the thermosetting resin material was cured. Thus, a laminated molding plate of [45/0/-45/90]3S, having a width of 320 mm, a length of 320 mm, and a thickness of 1.06 mm was formed.

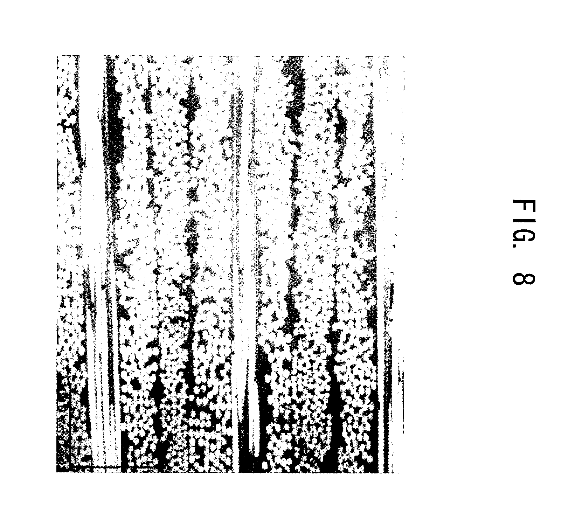

(2) A vertical cross section of this laminated molding plate was observed. FIG. 8 is a micrograph of the cross section. The average thickness of the fiber-reinforced layer was about 39 $\mu$m and the average thickness of the resin layer was about 5 $\mu$m. Thus, the average thickness of the resin layer was five thirty-ninths of that of the fiber-reinforced layer, i.e., 0.128 times the average thickness of the fiber-reinforced layer. The proportion of the thermoplastic resin material in the resin layer, calculated on the assumption that the whole thermoplastic resin material exists in the resin layer, was about 68%.

(3) A strip specimen having a width of 20 mm and a length of 250 mm was cut from the laminated molding plate and subjected to a tensile test. The tensile test was performed using "AUTOGRAPH", a material universal testing machine having a load cell of 10 t, produced by SHIMADZU CORPORATION, and the strain was measured using an axial extensometer having a gauge length of 100 mm, produced by MTS Systems Corporation. In the tensile test, the acoustic emission (AE) generated by a failure was measured using AE sensors attached to the specimen at the top and bottom to observe first ply failure stress and layer separation. The AE sensors used in the test had a resonance frequency of 1500 kHz and were produced by Nippon Physical Acoustics Ltd. AE signals detected by the AE sensors were processed by a preamplifier (set to 20 dB) and a bandpass filter (100 kHz to 300 kHz). The threshold was set to 45 dB. The point at which a large amplitude AE was observed and large energy release was detected was regarded as the point at which layer separation occurred. As a result of the tensile test, the failure stress was about 1080 MPa, the failure strain was about 1.95%, and the initial modulus was about 52 GPa. Layer separation occurred slightly before the occurrence of the final failure, at the point where the stress was about 1050 MPa and the strain was about 1.92%.

Example 2

A multiaxially reinforced prepreg sheet was produced using the following materials.

<Materials Used>

(Fiber Used as Reinforcing Fiber)

T800SC-24K produced by Toray Industries, Inc., fiber diameter: about 5.5 $\mu$m, number of fibers: 24000
(Resin Material Used as Thermosetting Resin Material) BT250E-1 produced by Bryte Technologies, Inc., epoxy resin
(Resin Material Used as Thermoplastic Resin Material) SP-500 produced by Toray Industries, Inc., nylon 12 powder, average particle diameter: 5 $\mu$m

<Manufacturing Process>

(1) A reinforcing fiber tow T800SC-24K was spread to a width of 24 mm through a pneumatic tow-spreading method (refer to Japanese Patent No. 3049225) and wound around a reel as a multi-filament spread thread.

(2) Thirteen of the reels spooled with the multi-filament spread thread were arranged in the width direction to form a reinforcing fiber sheet having no gaps using the method and apparatus disclosed in Japanese Unexamined Patent Application Publication No. 2005-029912. The obtained reinforcing fiber sheet had a width of 310 mm and a fiber weight of about 43 g/m$^2$.

(3) A thermoplastic resin material SP-500 having an average weight ratio of about 3% was uniformly dispersed on one surface of the reinforcing fiber sheet. Then, the reinforcing fiber sheet was allowed to pass between heat rolls heated to 250°C to form a resin-deposited reinforcing fiber sheet on which the powdered thermoplastic resin was deposited and whose fibers are sealed so as not to come apart.

(4) A plurality of the thus-formed resin-deposited reinforcing fiber sheets were stacked with the resin-deposited surfaces facing up such that the arrangement directions of the reinforcing fibers were oriented at, in sequence, 90 degrees, -45 degrees, 0 degrees, and 45 degrees, and then processed by a continuous press apparatus (refer to Japanese Unexamined Patent Application Publication No. 2003-181832) under processing conditions of 250°C and about 0.5 MPa to form a continuous laminated sheet.

(5) The resulting laminated sheet was continuously impregnated with a thermosetting resin material BT250E-1 from both surfaces thereof using the above-mentioned continuous press apparatus, under processing conditions of 90°C and about 1 MPa. Thus, a multiaxially reinforced prepreg sheet having a width of about 310 mm, an average thickness of about 170 $\mu$m, and a fiber content by volume of about 57% was formed.

<Production and Evaluation of Laminated Molding Plate>

(1) The resulting multiaxially reinforced prepreg sheet was cut into pieces having a required size, and six of them were stacked and subjected to a heat treatment lasting two hours at a temperature of 125°C in an autoclave (produced by ASHIDA MFG. CO.,LTD.) until the thermosetting resin material was cured. Thus, a laminated molding plate of [45/0/-45/90]3S, having a width of 320 mm, a length of 320 mm, and a thickness of 1.06 mm was formed.

(2) A vertical cross section of this laminated molding plate was observed. The average thickness of the fiber-reinforced layer was about 39 $\mu$m and the average thickness of the resin layer was about 4 $\mu$m. Thus, the average thickness of the resin layer was four thirty-ninths of that of the fiber-reinforced layer, i.e., 0.102 times the average thickness of the fiber-reinforced layer. The proportion of the thermoplastic resin material in the resin layer, calculated on the assumption that the whole thermoplastic resin material exists in the resin layer, was about 31%.

(3) A strip specimen having a width of 20 mm and a length of 250 mm was cut from the laminated molding plate and subjected to a tensile test similar to that conducted in Example 1. As a result of the tensile test, the failure stress was about 1040 MPa, the failure strain was about 1.91%, and the initial modulus was about 53 GPa. Layer separation occurred slightly before the occurrence of the final failure, at the point where the stress was about 995 MPa and the strain was about 1.87%.

Example 3

A multiaxially reinforced prepreg sheet was produced using the following materials.

<Materials Used>

(Fiber Used as Reinforcing Fiber)

HTA-12K produced by TOHO TENAX Co.,Ltd., diameter: about 7 $\mu$m, number of fibers: 12000
(Resin Material Used as Thermosetting Resin Material) BT250E-1 produced by Bryte Technologies, Inc., epoxy resin
(Resin Material Used as Thermoplastic Resin Material) Hot-melt copolyamide resin powder CM842P48 produced by Toray Industries, Inc., average particle diameter: 80 $\mu$m, low melting point (115°C) resin

<Manufacturing Process>

(1) A reinforcing fiber tow TA-12K was spread to a width of 20 mm through a pneumatic tow-spreading method (refer to Japanese Patent No. 3049225) and wound around a reel as a multi-filament spread thread.

(2) Sixteen of the reels spooled with the multi-filament spread thread were arranged in the width direction to form a reinforcing fiber sheet having no gaps using the method and apparatus disclosed in Japanese Unexamined Patent Application Publication No. 2005-029912. The obtained reinforcing fiber sheet had a width of 320 mm and a fiber weight of about 42 g/m$^2$.

(3) A thermoplastic resin material CM842P48 having an average weight ratio of about 5% was uniformly dispersed on one surface of the reinforcing fiber sheet. Then, the reinforcing fiber sheet was allowed to pass between heat rolls heated to 120°C to form a resin-deposited reinforcing fiber sheet on which the powdered thermoplastic resin was deposited and whose fibers are sealed so as not to come apart.

(4) A plurality of the thus-formed resin-deposited reinforcing fiber sheets were stacked with the resin-deposited surfaces facing up such that the arrangement directions of the reinforcing fibers were oriented at, in sequence, 90 degrees, -45 degrees, 0 degrees, and 45 degrees, and then processed by a continuous press apparatus (refer to Japanese Unexamined Patent Application Publication No. 2003-181832) under processing conditions of 120°C and about 0.5 MPa to form a continuous laminated sheet.

(5) The resulting laminated sheet was continuously impregnated with a thermosetting resin material BT250E-1 from both surfaces thereof using the above-mentioned continuous press apparatus, under processing conditions of 90°C and about 1 MPa. Thus, a multiaxially reinforced prepreg sheet having a width of about 320 mm, an average thickness of about 168 $\mu$m, and a fiber content by volume of about 56% was formed.

<Production and Evaluation of Laminated Molding Plate>

(1) The resulting multiaxially reinforced prepreg sheet was cut into pieces having a required size, and six of them were stacked and subjected to a heat treatment lasting two hours at a temperature of 125°C in an autoclave (produced by ASHIDA MFG. CO.,LTD.) until the thermosetting resin material was cured. Thus, a laminated molding plate of [45/0/-45/90]3S, having a width of 320 mm, a length of 320 mm, and a thickness of 1.08 mm was formed.

(2) A vertical cross section of this laminated molding plate was observed. The average thickness of the fiber-reinforced layer was about 39 $\mu$m and the average thickness of the resin layer was about 3 $\mu$m. Thus, the average thickness of the resin layer was three thirty-ninths of that of the fiber-reinforced layer, i.e., 0.077 times the average thickness of the fiber-reinforced layer. The proportion of the thermoplastic resin material in the resin layer, calculated on the assumption that the whole thermoplastic resin material exists in the resin layer, was about 62%.

(3) A strip specimen having a width of 20 mm and a length of 250 mm was cut from the laminated molding plate and subjected to a tensile test similar to that conducted in Example 1. As a result of the tensile test, the failure stress was about 820 MPa, the failure strain was about 1.81%, and the initial modulus was about 45 GPa. Layer separation occurred slightly before the occurrence of the final failure, at the point where the stress was about 800 MPa and the strain was about 1.72%.

Example 4

A multiaxially reinforced laminated molding was produced using the following materials.

<Materials Used>

(Fiber Used as Reinforcing Fiber)

TR50S-15K produced by MITSUBISHI RAYON CO.,LTD., fiber diameter: about 7 $\mu$m, number of fibers: 15000
(Resin Material Used as Thermosetting Resin Material) Bisphenol-A epoxy resin was used.
EPICLON 850 produced by DIC Corporation was used as the base resin, and 2E4MZ (2-ethyl-4-methylimidazole) produced by SHIKOKU CHEMICALS CORPORATION was used as the curing agent. Four units of the curing agent and 100 units of the base resin 100 stirred at a normal temperature was used as the resin.
(Resin Material Used as Thermoplastic Resin Material) SP-500 produced by Toray Industries, Inc., nylon 12 powder, average particle diameter: 5 $\mu$m

<Manufacturing Process>

(1) A reinforcing fiber tow TR50S-15K was spread to a width of 24 mm through a pneumatic tow-spreading method (refer to Japanese Patent No. 3049225) and wound around a reel as a multi-filament spread thread.

(2) Thirteen of the reels spooled with the multi-filament spread thread were arranged in the width direction to form a reinforcing fiber sheet having no gaps using the method and apparatus disclosed in Japanese Unexamined Patent Application Publication No. 2005-029912. The obtained reinforcing fiber sheet had a width of 310 mm and a fiber weight of about 42 g/m$^2$.

(3) A thermoplastic resin material SP-500 having an average weight ratio of about 10% was uniformly dispersed on one surface of the reinforcing fiber sheet. Then, the reinforcing fiber sheet was allowed to pass between heat rolls heated to 250°C to form a resin-deposited reinforcing fiber sheet on which the powdered thermoplastic resin was deposited and whose fibers are sealed so as not to come apart.

(4) A plurality of the thus-formed resin-deposited reinforcing fiber sheets were stacked with the resin-deposited surfaces facing up such that the arrangement directions of the reinforcing fibers were oriented at, in sequence, 90 degrees, -45 degrees, 0 degrees, and 45 degrees, and then processed by a continuous press apparatus (refer to Japanese Unexamined Patent Application Publication No. 2003-181832) under processing conditions of 250°C and about 0.5 MPa to form a continuous laminated sheet.

<Production and Evaluation of Laminated Molding Plate>

(1) The resulting laminated sheet was cut into pieces having a required size, and twelve of them were stacked to form a stacked material. The stacked material was set in a lower metal mold on which a release film was laid, and another release film and a upper metal mold were placed thereon. Then, the entirety of the mold was covered by a vacuum bag. The vacuum bag was provided with two holes, one through which the air in the vacuum bag was sucked and the other through which resin is injected.

(2) The complete set covered by the vacuum bag was placed on a hot plate heated to about 50°C so as to maintain the temperature of the upper and lower metal molds and the stacked material at about 50°C. This was intended to decrease the viscosity of the epoxy resin to improve the flowability of the resin.

(3) Using a vacuum pump, the air was sucked through the air-intake port while the epoxy resin was injected through the resin-inlet port. When the epoxy resin leaked out of the air-intake port, the injection of the resin was stopped. Then, while the set was maintained in that state, the temperature of the hot plate was raised to 125°C, and the set was left for about two hours until the epoxy resin was cured. Thus, a laminated molding plate of [45/0/-45/90]3S, having a width of 320 mm, a length of 320 mm, a thickness of about 2.15 mm, and a fiber content by volume of about 54% was formed.

(4) A vertical cross section of this laminated molding plate was observed. The average thickness of the fiber-reinforced layer was about 38 μm and the average thickness of the resin layer was about 7 μm. Thus, the average thickness of the resin layer was about seven thirty-eighths of that of the fiber-reinforced layer, i.e., 0.18 times the average thickness of the fiber-reinforced layer. The proportion of the thermoplastic resin material in the resin layer, calculated on the assumption that the whole thermoplastic resin material exists in the resin layer, was about 59%.

(5) A strip specimen having a width of 20 mm and a length of 250 mm was cut from the laminated molding plate and subjected to a tensile test similar to that conducted in Example 1. As a result of the tensile test, the failure stress was about 890 MPa, the failure strain was about 1.74%, and the initial modulus was about 47 GPa. Layer separation occurred slightly before the occurrence of the final failure, at the point where the stress was about 825 MPa and the strain was about 1.64%.

Example 5

A multiaxially reinforced prepreg sheet was produced using the following materials.

<Materials Used>

(Fiber Used as Reinforcing Fiber) T800SC-24K produced by Toray Industries, Inc., fiber diameter: about 5.5 μm, number of fibers: 24000

(Resin Material Used as Thermosetting Resin Material) BT250E-1 produced by Bryte Technologies, Inc., epoxy resin

(Resin Material Used as Thermoplastic Resin Material) Nylon 12 staples

<Manufacturing Process>

(1) A reinforcing fiber tow T800SC-24K was spread to a width of 24 mm through a pneumatic tow-spreading method (refer to Japanese Patent No. 3049225) and wound around a reel as a multi-filament spread thread.

(2) Thirteen of the reels spooled with the multi-filament spread thread were arranged in the width direction to form a reinforcing fiber sheet having no gaps using the method and apparatus disclosed in Japanese Unexamined Patent Application Publication No. 2005-029912. The obtained reinforcing fiber sheet had a width of 310 mm and a fiber weight of about 43 g/m$^2$.

(3) Nylon 12 staples, serving as the thermoplastic resin material, having an average weight of about 4g/m$^2$ were uniformly dispersed on one surface of the reinforcing fiber sheet. Then, the reinforcing fiber sheet was allowed to pass between heat rolls heated to 200°C. Thus, a resin-deposited reinforcing fiber sheet, on which the nylon 12 staples were deposited so as to seal the fibers, was formed.

(4) A plurality of the thus-formed resin-deposited reinforcing fiber sheets were stacked with the resin-deposited surfaces facing up such that the arrangement directions of the reinforcing fibers were oriented at, in sequence, 90 degrees, -45 degrees, 0 degrees, and 45 degrees, and then processed by a continuous press apparatus (refer to Japanese Unexamined Patent Application Publication No. 2003-181832) under processing conditions of 200°C and about 0.5 MPa to form a continuous laminated sheet.

(5) The resulting laminated sheet was continuously impregnated with a thermosetting resin material BT250E-1 from both surfaces thereof using the above-mentioned continuous press apparatus, under processing conditions of 90°C and about 1 MPa. Thus, a multiaxially reinforced prepreg sheet having a width of about 310 mm, an average thickness of about 178 $\mu$m, and a fiber content by volume of about 54% was formed.

<Production and Evaluation of Laminated Molding Plate>

(1) The resulting multiaxially reinforced prepreg sheet was cut into pieces having a required size, and six of them were stacked and subjected to a heat treatment lasting two hours at a temperature of 125°C in an autoclave (produced by ASHIDA MFG. CO.,LTD.) until the thermosetting resin material was cured. Thus, a laminated molding plate of [45/0/-45/90]3S, having a width of 320 mm, a length of 320 mm, and a thickness of 1.07 mm was formed.

(2) A vertical cross section of this laminated molding plate was observed. The average thickness of the fiber-reinforced layer was about 34 $\mu$m and the average thickness of the resin layer was about 10 $\mu$m. Thus, the average thickness of the resin layer was ten thirty-ninths of that of the fiber-reinforced layer, i.e., 0.294 times the average thickness of the fiber-reinforced layer. The proportion of the thermoplastic resin material in the resin layer, calculated on the assumption that the whole thermoplastic resin material exists in the resin layer, was about 39%.

(3) A strip specimen having a width of 20 mm and a length of 250 mm was cut from the laminated molding plate and subjected to a tensile test similar to that conducted in Example 1. As a result of the tensile test, the failure stress was about 1002 MPa, the failure strain was about 1.83%, and the initial modulus was about 52 GPa. Layer separation occurred slightly before the occurrence of the final failure, at the point where the stress was about 950 MPa and the strain was about 1.76%.

Comparative Example 1

A unidirectionally reinforced prepreg sheet was produced using the following materials.

<Materials Used>

(Fiber Used as Reinforcing Fiber) T800SC-24K produced by Toray Industries, Inc., fiber diameter: about 5.5 $\mu$m, number of fibers: 24000

(Resin Material Used as Thermosetting Resin Material) BT250E-1 produced by Bryte Technologies, Inc., epoxy resin

<Manufacturing Process>

(1) A reinforcing fiber tow T800SC-24K was spread to a width of 24 mm through a pneumatic tow-spreading method (refer to Japanese Patent No. 3049225) and wound around a reel as a multi-filament spread thread.

(2) Thirteen of the reels spooled with the multi-filament spread thread were arranged in the width direction to form a reinforcing fiber sheet having no gaps using the method and apparatus disclosed in Japanese Unexamined Patent Application Publication No. 2005-029912. The obtained reinforcing fiber sheet had a width of 310 mm and a fiber weight of about 43 g/m$^2$.

(3) The resulting reinforcing fiber sheet was continuously impregnated with a thermosetting resin material BT250E-1 from one surface thereof using the above-mentioned continuous press apparatus, under processing conditions of 90°C and about 1 MPa. Thus, a unidirectionally reinforced prepreg sheet having a width of about 310 mm, an average thickness of about 41 μm, and a fiber content by volume of about 58% was formed.

<Production and Evaluation of Laminated Molding Plate>

(1) Forty-eight of the resulting unidirectionally reinforced prepreg sheets were stacked and subjected to a heat treatment lasting two hours at a temperature of 125°C in an autoclave (produced by ASHIDA MFG. CO.,LTD.) until the thermosetting resin material was cured. Thus, a laminated molding plate of [45/0/-45/90]6S, having a width of 320 mm, a length of 320 mm, and a thickness of 1.99 mm was formed.

(2) A strip specimen having a width of 20 mm and a length of 250 mm was cut from the laminated molding plate and subjected to a tensile test similar to that conducted in Example 1. As a result of the tensile test, the failure stress was about 1014 MPa, the failure strain was about 1.85%, and the initial modulus was about 53 GPa. Layer separation occurred slightly before the occurrence of the final failure, at the point where the stress was about 990 MPa and the strain was about 1.81%.

Comparative Example 2

<Materials Used>

Materials the same as those used in Comparative Example 1 were used.

<Manufacturing Process>

A unidirectionally reinforced pre-prepreg sheet was produced using a manufacturing process similar to that according to Comparative Example 1.

<Production and Evaluation of Laminated Molding Plate>

(1) Three of the resulting unidirectionally reinforced prepreg sheets were stacked to form a unidirectionally reinforced prepreg sheet having a thickness three times greater than that of the thin unidirectionally reinforced prepreg sheet, and sixteen of the sets were stacked and subjected to a heat treatment lasting two hours at a temperature of 125°C in an autoclave (produced by ASHIDA MFG. CO.,LTD.) until the thermosetting resin material was cured. Thus, a laminated molding plate of [45/0/-45/90]6S, having a width of 320 mm, a length of 320 mm, and a thickness of 1.99 mm was formed.

(2) A strip specimen having a width of 20 mm and a length of 250 mm was cut from the laminated molding plate and subjected to a tensile test similar to that conducted in Example 1. As a result of the tensile test, the failure stress was about 890 MPa, the failure strain was about 1.78%, and the initial modulus was about 52 GPa. Layer separation occurred at the point where the stress was about 780 MPa and the strain was about 1.48%, which was a stage earlier than that of Comparative Example 1.

The results of the foregoing examples and comparative examples show the following:

(1) A laminated molding plate whose fiber-reinforced layer has a thickness of about 120 μm causes layer separation during the tensile test. In contrast, the laminated molding plate having the thin layer fiber-reinforced layer whose fiber-reinforced layer has a thickness of about 40 μm does not cause layer separation until the final failure strength is substantially reached. This result agrees with that of Non-patent Document 1.

(2) The layer separation strength of the laminated molding plate according to Examples 1 to 5 is the same as that of a laminated molding plate having a thin fiber-reinforced layer. In other words, according to the present invention, it can be expected that a multiaxially reinforced laminated molding having a high quality and a low production cost is obtained. Brief Description of Drawings

FIG. 1 is a schematic cross section of a multiaxially reinforced laminated molding according to an embodiment of the present invention.
FIG. 2 is a schematic cross section of fiber-reinforced layers.
FIG. 3 shows a resin deposition step in a manufacturing method of the present invention.
FIG. 4 shows another resin deposition step in the manufacturing method of the present invention.
FIG. 5 shows a laminating step and an impregnation step of the manufacturing method of the present invention.
FIG. 6 shows a molding step in a manufacturing process of the multiaxially reinforced laminated molding.
FIG. 7 shows a molding step in another manufacturing process.
FIG. 8 is a photograph showing a cross section of a laminated molding plate.

Reference Numerals

F: molding
L: laminated sheet
P: prepreg
R: release film
S: reinforcing fiber sheet
T1: sprayer
T2: sprayer
T3: sprayer
T4: adhesive film
1: sheet-feeding roller
2a: heat roller
2b: press roller
3: film-feeding roller
4: film-feeding roller
5: film-feeding roller
6a: heat roller
6b: press roller
7: take-up roller
8: take-up roller
10: sheet-feeding roller
11: feed roller
12: film take-up roller
13a: heat roller
13b: press roller
14a: film-feeding roller
14b: film take-up roller
15a: film-feeding roller
15b: film take-up roller
16a: feed roller
16b: feed roller
17a: heat roller
17b: press roller
18a: feed roller
18b: feed roller
19: film-feeding roller
20: sheet take-up roller

**Claims**

1.  A multiaxially reinforced laminated molding comprising a plurality of fiber-reinforced layers stacked such that reinforcing fibers are oriented in n-axial directions (n is two or more) and being impregnated with a thermosetting resin material and cured, wherein at least one of the fiber-reinforced layers has an average thickness of 80 $\mu$m or less, wherein a resin layer having an average thickness of 0.3 x t or less, t being an average thickness of the fiber-reinforced layer on one side or the fiber-reinforced layers on both sides of the resin layer, is disposed between the fiber-reinforced layers, and wherein the resin layer contains 30% to 70% by volume of a thermoplastic resin material that is substantially uniformly distributed in a thermosetting resin material and at least partially adhered to the fiber-reinforced layers.

2.  The multiaxially reinforced laminated molding according to claim 1, wherein the resin layer has an average thickness of 0.2 x t or less, t being an average thickness of the fiber-reinforced layer on one side or the fiber-reinforced layers on both sides of the resin layer.

3.  The multiaxially reinforced laminated molding according to claim 1 or 2, wherein the thermoplastic resin material is a particulate or fibrous material.

4.  The multiaxially reinforced laminated molding according to any one of claims 1 to 3, wherein all of the fiber-reinforced layers have an average thickness of 80 $\mu$m or less.

5.  A method for producing a multiaxially reinforced laminated molding, the method comprising:

    a resin deposition step including preparing a plurality of reinforcing fiber sheets each formed of a plurality of continuous reinforcing fibers arranged substantially uniformly, at least one of the reinforcing fiber sheets having a weight of 80 g/m$^2$ or less, dispersing a thermoplastic resin material substantially uniformly on one surface or both surfaces of each reinforcing fiber sheet, the amount of the thermoplastic resin material being 10% or less relative to the weight of the reinforcing fiber sheet having a lower weight per unit area than the reinforcing fiber sheet adjacent thereto when stacked, and heating or applying heat and pressure to the thermoplastic resin material to deposit the thermoplastic resin material onto the reinforcing fiber sheets to form resin-deposited reinforcing fiber sheets;
    a laminating step for forming a laminated sheet by stacking a plurality of the resin-deposited reinforcing fiber sheets such that the directions in which the reinforcing fibers are arranged are oriented in multiple directions and such that the thermoplastic resin material is disposed between the resin-deposited reinforcing fiber sheets;
    an impregnation step for forming a multiaxially reinforced prepreg sheet by impregnating the laminated sheet with a thermosetting resin material from at least one surface thereof; and
    a molding step including cutting the multiaxially reinforced prepreg sheet into pieces having a required size, stacking a required number of the prepreg sheets at required angles, and subjecting the prepreg sheets to hot press molding to cure the thermosetting resin material.

6.  A method for producing a multiaxially reinforced laminated molding, the method comprising:

    a resin deposition step including preparing a plurality of reinforcing fiber sheets each formed of a plurality of continuous reinforcing fibers arranged substantially uniformly, at least one of the reinforcing fiber sheets having a weight of 80 g/m$^2$ or less, dispersing a thermoplastic resin material substantially uniformly on one surface or both surfaces of each reinforcing fiber sheet, the amount of the thermoplastic resin material being 10% or less relative to the weight of the reinforcing fiber sheet having a lower weight per unit area than the reinforcing fiber sheet adjacent thereto when stacked, and heating or applying heat and pressure to the thermoplastic resin material to deposit the thermoplastic resin material onto the reinforcing fiber sheets to form resin-deposited reinforcing fiber sheets;
    a laminating step for forming a continuous laminated sheet by stacking a plurality of the resin-deposited reinforcing fiber sheets including at least one continuous resin-deposited reinforcing fiber sheet such that the directions in which the reinforcing fibers are arranged are oriented in multiple directions and such that the thermoplastic resin material is disposed between the resin-deposited reinforcing fiber sheets;
    an impregnation step for forming a continuous multiaxially reinforced prepreg sheet by impregnating the continuous laminated sheet with a thermosetting resin material from at least one surface thereof; and
    a molding step including cutting the multiaxially reinforced prepreg sheet into pieces having a required size, stacking a required number of the prepreg sheets at required angles, and subjecting the prepreg sheets to hot press molding to cure the thermosetting resin material.

7. A method for producing a multiaxially reinforced laminated molding, the method comprising:

a resin deposition step including preparing a plurality of reinforcing fiber sheets each formed of a plurality of continuous reinforcing fibers arranged substantially uniformly, at least one of the reinforcing fiber sheets having a weight of 80 g/m$^2$ or less, dispersing a thermoplastic resin material substantially uniformly on one surface or both surfaces of each reinforcing fiber sheet, the amount of the thermoplastic resin material being 10% or less relative to the weight of the reinforcing fiber sheet having a lower weight per unit area than the reinforcing fiber sheet adjacent thereto when stacked, and heating or applying heat and pressure to the thermoplastic resin material to deposit the thermoplastic resin material onto the reinforcing fiber sheets to form resin-deposited reinforcing fiber sheets;

a laminating step for forming a laminated sheet by stacking a plurality of the resin-deposited reinforcing fiber sheets such that the directions in which the reinforcing fibers are arranged are oriented in multiple directions and such that the thermoplastic resin material is disposed between the resin-deposited reinforcing fiber sheets; and

a molding step including cutting the laminated sheet into pieces having a required size, stacking a required number of the laminated sheets at required angles in a mold, injecting a thermosetting resin material in the mold so that the laminated sheets are impregnated with the thermosetting resin material, and subjecting the laminated sheets to heating or hot press molding to cure the thermosetting resin material.

8. The manufacturing method according to any one of claims 5 to 7, further comprising an integration step for heat-sealing the reinforcing fiber sheets together with the thermoplastic resin material by heating or applying heat and pressure to the laminated sheets.

9. The manufacturing method according to any one of claims 5 to 8,
wherein a microparticulate thermoplastic resin material having an average particle diameter of 80 $\mu$m or less or a fibrous thermoplastic resin material having an average cross-sectional diameter of 80 $\mu$m or less is used as the thermoplastic resin material.

10. The manufacturing method according to any one of claims 5 to 9,
wherein at least one of the reinforcing fiber sheets is a multi-filament spread thread sheet having a weight of 80 g/m$^2$ or less, the multi-filament spread thread sheet including a plurality of multi-filament spread threads, formed by continuously spreading reinforcing fiber tows, arranged in a width direction.

# FIG. 1

# FIG. 2

# FIG. 3

# FIG. 4

FIG. 5

FIG. 6A

FIG. 6B

FIG. 7A

FIG. 7B

FIG. 7C

FIG. 8

## INTERNATIONAL SEARCH REPORT

| | International application No. |
|---|---|
| | PCT/JP2007/066034 |

A. CLASSIFICATION OF SUBJECT MATTER
*B29C43/12*(2006.01)i, *B29B11/16*(2006.01)i, *B29C70/06*(2006.01)i, *B32B5/00* (2006.01)n

According to International Patent Classification (IPC) or to both national classification and IPC

B. FIELDS SEARCHED

Minimum documentation searched (classification system followed by classification symbols)
B29C43/12, B29B11/16, B29C70/06, B32B5/00, B32B5/28, C08J5/04, C08J5/24

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-291304 A  (Toray Industries, Inc.), 21 October, 2004 (21.10.04), Claims; Par. Nos. [0001], [0029], [0030] to [0034], [0049] (Family: none) | 1-10 |
| A | JP 2003-082117 A  (Toray Industries, Inc.), 19 March, 2003 (19.03.03), Abstract; Claim 12; Par. Nos. [0039], [0068], [0086], [0091] to [0094], [0100]; drawings & WO 2003/004758 A1    & EP 1408152 A1 & US 2004/170554 A1 | 1-10 |
| A | JP 2006-198784 A  (Toray Industries, Inc.), 03 August, 2006 (03.08.06), Abstract; Par. Nos. [0010], [0032]; drawings (Family: none) | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 October, 2007 (23.10.07) | 06 November, 2007 (06.11.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2007/066034 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-182923 A (Mitsubishi Rayon Co., Ltd.), 02 July, 2004 (02.07.04), Abstract; Par. Nos. [0017], [0018] & WO 2004/009314 A1     & EP 1541312 A1 & CN 1668433 A          & US 2006/035548 A1 | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI741575 B
- US 5028478 A
- WO 2001063033 A
- JP 2006022471 A
- WO 2005002819 A
- JP 2003221771 A

- JP 3049225 B
- JP 2005029912 A
- JP 2003181832 A

**Non-patent literature cited in the description**

- **HIDEKI SASAYAMA.** Influence of layer thickness on first ply failure of multidirectionally reinforced composite material laminated plate. *journal of the Japan Society for Composite Materials,* 2004, vol. 30 (4), 142-148